# FASCICULE DE BREVET EUROPEEN

(11) **EP 4 309 189 B1**
(45) Date de publication et mention de la délivrance du brevet: **29.01.2025**
(21) Numéro de dépôt: 22716029.8
(22) Date de dépôt: 17.03.2022
(51) Int. Cl.: G21C 17/07, G21C 19/08, G21C 19/07

(54) **DISPOSITIF POUR MONTER OU DESCENDRE UN ASSEMBLAGE DE COMBUSTIBLE NUCLÉAIRE DANS UNE PISCINE D'UNE INSTALLATION NUCLÉAIRE**
VORRICHTUNG ZUM HEBEN ODER SENKEN EINES KERNBRENNSTABBÜNDELS IN EINEM BECKEN EINER KERNTECHNISCHEN ANLAGE
DEVICE FOR RAISING OR LOWERING A NUCLEAR FUEL ASSEMBLY IN A POOL OF A NUCLEAR INSTALLATION

(30) Priorité: 19.03.2021 FR 2102753
(43) Date de publication de la demande: 24.01.2024
(73) Titulaire: Framatome, 92400 Courbevoie (FR)
(72) Inventeur: LOTAUT, Yannick, 69300 Caluire et Cuire (FR); COUSTOURIER, Franck, 38460 Chamagnieu (FR); BUNOZ, Emmanuel, 69720 Saint Bonnet de Mure (FR); BASSET, Jean-Christophe, 69005 Lyon (FR); GUEDICHI, Abdelghani, 69250 Neuville-sur-Saone (FR)
(74) Mandataire: Lavoix
(86) Numéro de dépôt international: PCT/EP2022/056938
(87) Numéro de publication internationale: WO 2022/194990

(56) Documents cités:
- JP-A- S5 712 397
- US-A- 5 546 435
- US-A1- 2019 362 862

## Description

La présente invention concerne un dispositif pour monter ou descendre un assemblage de combustible nucléaire dans une piscine d'une installation nucléaire, ou « descenseur ».

L'invention concerne également un procédé de contrôle d'étanchéité d'un assemblage de combustible nucléaire mettant en oeuvre un tel dispositif, et un procédé de rénovation pour obtenir ce dispositif à partir d'un dispositif existant.

Un réacteur nucléaire comprend une cuve dans laquelle est disposée une pluralité d'assemblages de combustible nucléaire formant ensemble le coeur du réacteur nucléaire. Le réacteur nucléaire est généralement disposé dans un puits de réacteur rempli d'eau lorsque le réacteur est à l'arrêt, le puits communiquant avec au moins une piscine d'entreposage également remplie d'eau permettant de réaliser les opérations de maintenance. La piscine d'entreposage comprend différents systèmes pour déplacer, tester, ou entreposer les assemblages de combustible nucléaire.

La piscine comprend notamment un descenseur, c'est-à-dire un dispositif adapté pour descendre des assemblages de combustible nucléaire neufs depuis la surface de la piscine d'entreposage vers le fond de la piscine d'entreposage. Le descenseur permet également de remonter un assemblage de combustible nucléaire près de la surface pour intervention. Le descenseur comprend en général une nacelle adaptée pour recevoir un assemblage de combustible nucléaire, et pour circuler le long de deux rails verticaux. La nacelle est ajourée pour permettre une évacuation de la chaleur dégagée par l'assemblage de combustible nucléaire.

Chaque assemblage de combustible nucléaire comprend un faisceau de crayons de combustible nucléaire, chaque crayon de combustible nucléaire comprenant une gaine tubulaire fermée à ses deux extrémités et contenant du combustible nucléaire. En fonctionnement, un fluide de refroidissement circule à travers le coeur, le long des assemblages de combustible nucléaire, et en particulier le long de leurs crayons de combustible nucléaire. Le fluide de refroidissement maintient le coeur à une température de fonctionnement et joue également le rôle de modérateur pour la réaction nucléaire.

Au cours de son exploitation, un crayon de combustible nucléaire d'un assemblage de combustible nucléaire peut présenter un défaut d'étanchéité, par exemple par percement ou fissuration de la gaine du crayon. Un tel défaut d'étanchéité peut laisser s'échapper des produits de fission résultant de la réaction nucléaire. Ces produits de fission se mélangent au fluide de refroidissement et peuvent venir se déposer sur les éléments constituant le réacteur nucléaire.

La surveillance de l'étanchéité des crayons des assemblages de combustible nucléaire chargés en réacteur nucléaire est réalisée par des mesures régulières de la radioactivité du fluide de refroidissement. Les mesures des activités en gaz et en composants iodés permettent de détecter un défaut d'étanchéité et sont utilisées pour estimer le nombre de crayons affectés, leur taux de combustion, leur emplacement dans le coeur et la taille du ou des défauts. Cependant, ces mesures ne permettent pas de déterminer quel assemblage de combustible nucléaire contient un crayon de combustible présentant un défaut d'étanchéité. Cette détermination a lieu par le contrôle individuel des assemblages de combustible nucléaire irradiés potentiellement affectés lorsque le réacteur est à l'arrêt.

Pour détecter un éventuel défaut d'étanchéité d'un assemblage de combustible nucléaire irradié, il est connu de réaliser un contrôle d'étanchéité par ressuage (« *sipping »* en anglais). Le ressuage consiste à provoquer une augmentation relative de la pression interne des crayons de combustible nucléaire d'un assemblage de combustible nucléaire par rapport à la pression extérieure, ou une augmentation du volume des fluides à l'intérieur des crayons de combustible nucléaire d'un assemblage de combustible nucléaire. Comme les pressions à l'intérieur et à l'extérieur du crayon de combustible tendent à s'équilibrer naturellement, il se produit un transfert des produits de fission de l'intérieur du crayon vers l'extérieur. L'augmentation relative de la pression interne ou du volume des fluides à l'intérieur des crayons de combustible est par exemple obtenue en provoquant une augmentation de la température de l'assemblage de combustible nucléaire ou une diminution de la pression extérieure.

Un contrôle d'étanchéité par ressuage peut être effectué dans une cellule de ressuage fixée dans la piscine d'entreposage. Cependant, dans les centrales nucléaires anciennes, ces cellules de ressuage fixes sont également anciennes, et leur maintenance et leur mise à jour sont coûteuses.

En remplacement, on a parfois recours à des cellules de ressuage mobiles installées spécialement dans la piscine avant les opérations de maintenance du réacteur nucléaire, puis retirées une fois les opérations de maintenance terminées. Les cellules de ressuage mobiles sont conçues pour résister aux incidents, notamment en cas de séisme. Toutefois, l'installation et le retrait des cellules de ressuages mobiles représente un certain coût.

Le document US 2019/362862 décrit un dispositif selon le préambule de la revendication 1.

Un but de l'invention est de réduire le coût des tests d'étanchéité des assemblages de combustible nucléaire, en maintenant la fiabilité des tests.

À cet effet, l'invention a pour objet un dispositif selon la revendication 1.

Selon des modes de réalisation particuliers, le dispositif comprend l'une ou plusieurs des caractéristiques correspondant aux revendications 2 à 6, prise(s) isolément ou selon toutes les combinaisons techniquement possibles.

L'invention a aussi pour objet un ensemble selon la revendication 7 ou, selon un mode de réalisation particulier, selon la revendication 8.

L'invention a aussi pour objet un procédé de contrôle d'étanchéité selon la revendication 9.

L'invention a aussi pour objet un procédé de rénovation selon la revendication 10.

L'invention sera mieux comprise à la lecture de la description qui va suivre, donnée uniquement à titre d'exemple et faite en se référant aux dessins annexés, sur lesquels :
- la figure 1 est une vue schématique, de côté, d'une partie d'une piscine d'une installation nucléaire comprenant un dispositif selon l'invention ; et
- la figure 2 est une vue analogue à celle de la figure 1, la piscine comprenant un descenseur de l'état de la technique pouvant faire l'objet d'un procédé de rénovation selon l'invention, afin de le transformer en un dispositif selon l'invention.

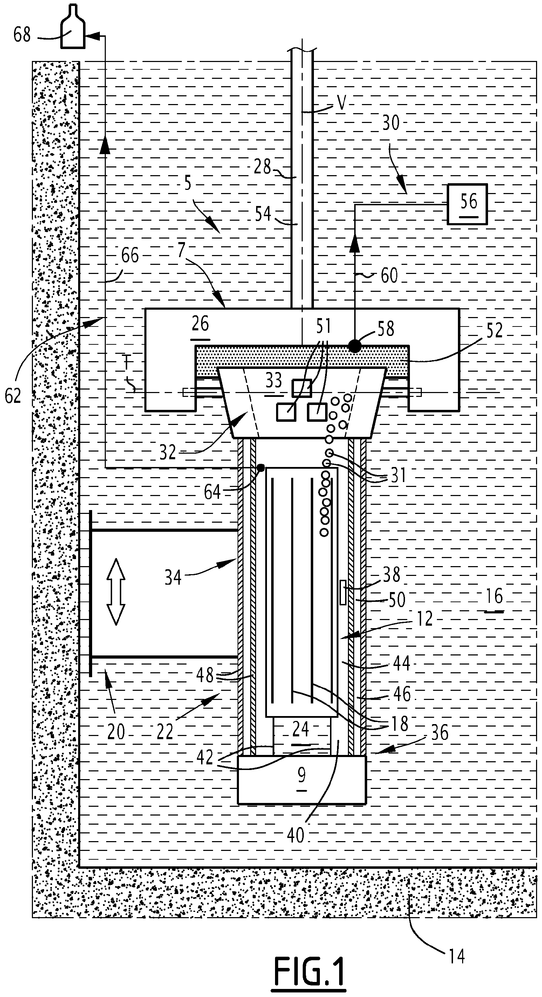

En référence, à la figure 1, on décrit un ensemble 5 comprenant un dispositif 7 selon l'invention, et avantageusement une unité de chauffage 9 amovible, par exemple située en dessous du dispositif 7.

Selon des variantes non représentées, l'unité de chauffage 9 est fixée à demeure sur le dispositif 7, ou est absente.

Le dispositif 7 est adapté pour monter ou descendre un assemblage de combustible nucléaire 12 dans une piscine 14 d'une installation nucléaire (dont seule la piscine 14 est partiellement représentée).

La piscine 14 est remplie d'une étendue d'eau 16. Par « eau », on entend ici une solution aqueuse pouvant comprendre d'autres constituants souhaités dans l'eau de la piscine 14, ou non souhaités, par exemple des polluants issus du combustible nucléaire présent dans l'assemblage de combustible nucléaire 12 ou bien dans un autre assemblage.

L'assemblage de combustible nucléaire 12 comporte par exemple une pluralité de crayons 18 s'étendant selon une direction V sensiblement verticale, et contenant du combustible nucléaire. L'assemblage de combustible nucléaire 12 est par exemple neuf, c'est-à-dire n'ayant pas déjà été en service dans un réacteur (non représenté) de l'installation nucléaire, ou irradié, c'est-à-dire ayant déjà été en service dans un réacteur et sorti de ce réacteur pour une maintenance ou un entreposage.

L'assemblage de combustible 12 est par exemple plus haut que large, et s'étend typiquement sur plusieurs mètres verticalement. L'assemblage de combustible nucléaire 12 présente par exemple une section carrée ou hexagonale perpendiculairement à la direction V.

Le dispositif 7 peut être qualifié de « descenseur », car il est adapté pour descendre l'assemblage de combustible nucléaire 12 depuis la surface de l'étendue d'eau 16 vers le fond de la piscine 14. Le dispositif 7 permet également de remonter l'assemblage de combustible nucléaire 12 vers la surface.

Le dispositif 7 comprend un système de guidage 20 fixé sur la piscine 14, et une nacelle 22 définissant un logement 24 pour recevoir l'assemblage de combustible nucléaire 12 et de l'eau 40, la nacelle 22 étant montée mobile sur le système de guidage 20 en translation selon la direction V.

Dans l'exemple, le dispositif 7 comprend avantageusement un couvercle 26 par exemple monté rotatif sur la nacelle 22 autour d'un axe transversal T, et un organe 28 d'actionnement du couvercle 26.

Le dispositif 7 comprend un système de prélèvement 62 pour prélever au moins un échantillon d'eau 68 dans le logement 24, dans le but de détecter des produits de fission en provenance des crayons 18.

Avantageusement, le dispositif 7 comprend aussi un système de récupération et d'analyse 30 adapté pour récupérer et analyser d'éventuels gaz de ressuage 31 issus de l'assemblage de combustible 12.

Grâce à l'unité de chauffage 9 ou à la puissance thermique résiduelle de l'assemblage de combustible si celle-ci s'avère suffisante, et au système de prélèvement 62, le dispositif 7 permet de réaliser un test de ressuage par chauffage de l'assemblage de combustible nucléaire 12.

En variante, le test de ressuage est effectué en remontant le dispositif 7 de façon à abaisser la pression hydrostatique autour de l'assemblage de combustible nucléaire 12.

Le couvercle 26 et le système de récupération et d'analyse 30 permettent une analyse des éventuels gaz de ressuage 31.

L'axe transversal T est par exemple sensiblement perpendiculaire à la direction V.

Le système de guidage 20 comprend par exemple deux rails verticaux (non représentés).

La nacelle 22 comprend une extrémité supérieure 32 définissant un passage 33 adapté pour permettre un chargement de l'assemblage de combustible nucléaire 12 dans le logement 24 par le haut, une enveloppe latérale 34 adaptée pour entourer l'assemblage de combustible nucléaire 12 autour de la direction V, et une extrémité inférieure 36 configurée pour servir de support de fixation à l'unité de chauffage 9. La nacelle 22 comprend avantageusement un capteur de température 38 situé dans le logement 24.

Selon une variante non représentée, la nacelle 22 comprend plusieurs capteurs de température situés dans le logement 24 et analogues au capteur 38.

L'unité de chauffage 9 est adaptée pour chauffer l'eau 40 située dans le logement 24. L'unité de chauffage comprend par exemple une ou plusieurs résistances électriques (non représentées).

L'eau 40 provient par exemple de l'étendue d'eau 16.

L'eau 40, une fois chauffée, a par exemple une température supérieure de 20°C à 90°C à celle de l'étendue d'eau 16.

L'extrémité inférieure 36 est avantageusement adaptée pour être traversée par de l'eau en provenance de l'étendue d'eau 16, tout en servant de support à l'assemblage de combustible nucléaire 12. Dans l'exemple, des pieds 42 de l'assemblage de combustible nucléaire 12 reposent sur l'extrémité inférieure 36. En l'absence de l'unité de chauffage 9, ou lorsque que l'unité de chauffage 9 n'est pas en fonctionnement, l'extrémité inférieure 36 est avantageusement adaptée pour laisser entrer de l'eau extérieure (une partie de l'étendue d'eau 16) dans le logement 24 pour refroidir l'assemblage de combustible 12.

L'extrémité inférieure 36 est avantageusement configurée pour permettre un montage facile, puis un démontage de l'unité de chauffage 9, alors que la nacelle 22 est immergée dans l'eau 16 de la piscine 14. L'unité de chauffage 9 peut par exemple être mise en place et retirée au moyen d'un outil perche lorsque la nacelle 22 est remontée en position extrême haute sans assemblage.

L'enveloppe latérale 34 est configurée pour former une gaine 44 confinant l'eau 40 dans le logement 24, depuis l'extrémité inférieure 36 vers l'extrémité supérieure 32, et de canalisation des éventuels gaz de ressuage 31 vers l'extrémité supérieure 32. L'enveloppe latérale 34 délimite latéralement le logement 24 autour de la direction V, et est étanche à l'eau.

L'enveloppe latérale 34 comprend avantageusement un isolant thermique 46 disposé entre l'eau 16 contenue dans la piscine 14 et l'eau 40 contenue dans la gaine 44. Par isolant thermique, on entend ici un matériau dont la conductivité thermique est par exemple inférieure à 0,04 W.m⁻¹.K⁻¹.

Par exemple, l'enveloppe latérale 34 comprend une double paroi 48 en acier inoxydable, et une couche d'air 50 située dans la double paroi 48, l'air de la couche d'air 50 formant ici l'isolant thermique 46.

L'enveloppe latérale 34 présente avantageusement une forme prismatique dans la direction V, à base par exemple carrée ou hexagonale, selon le type de l'assemblage de combustible nucléaire 12.

Le logement 24 est par ailleurs délimité dans la direction V par l'extrémité inférieure 36 et l'extrémité supérieure 32.

Le capteur de température 38 est adapté pour mesurer la température de l'eau 40 dans le logement 24.

Un système de contrôle (non représenté) du dispositif 7 est avantageusement adapté pour rétroagir sur l'unité de chauffage 9 afin de contrôler la température de l'eau 40.

L'extrémité supérieure 32 présente par exemple une forme générale s'évasant dans la direction V vers le haut. L'extrémité supérieure 32 est par exemple adaptée pour servir de support de fixation à des équipements 51 portés par la nacelle 22, qui ne seront pas détaillés ici.

L'extrémité supérieure 32 est avantageusement adaptée pour laisser passer les éventuels gaz de ressuage 31 en provenance du logement 24 vers le couvercle 26.

Dans l'exemple, le couvercle 26 est mobile en rotation par rapport à la nacelle 22 entre une position active (représentée sur la figure 1), dans laquelle le couvercle 26 se situe au-dessus de l'extrémité supérieure 32, le couvercle 26 délimitant avantageusement une poche 52 de rétention des gaz, et une position de repos, dans laquelle le couvercle 26 laisse libre le passage 33 pour permettre le chargement de l'assemblage de combustible nucléaire 12 dans le logement 24. La position de repos n'est pas représentée, mais se déduit de la position active représentée sur la figure 1 par une rotation autour de l'axe transversal T.

La poche 52 s'étend avantageusement jusqu'à l'extrémité supérieure 32 et est adaptée pour empêcher l'eau 40 de sortir du logement 24 par l'extrémité supérieure 32. La poche 52 est avantageusement constituée d'air et de gaz en provenance du logement 24.

L'organe 28 est adapté pour faire passer le couvercle 26 de la position active à la position de repos, et réciproquement. L'organe 28 comprend par exemple une tige 54 montée sur le couvercle 26.

Selon des variantes non représentées, le couvercle 26 est monté différemment sur la nacelle 22, ou bien n'est pas monté sur la nacelle 22. Dans ce dernier cas, l'organe 28 est avantageusement configuré pour apporter le couvercle 26 dans la position active, et pour le retirer.

Le système de récupération et d'analyse 30 comprend avantageusement au moins un analyseur 56, une prise de gaz 58 adaptée pour prélever les éventuels gaz de ressuage 31 présents dans la poche de gaz 52 formée par le couvercle 26, et une canalisation 60 adaptée pour conduire les gaz de ressuage 31 prélevés de la prise de gaz 58 vers l'analyseur 56.

L'analyseur 56 est par exemple configuré pour mesurer la radioactivité β et/ou γ, afin de déterminer si les gaz prélevés contiennent des gaz de ressuage 31.

Le système de prélèvements d'eau 62 comprend avantageusement au moins une prise de prélèvement 64, et une canalisation 66 adaptée pour conduire les prélèvements d'eau vers l'échantillon 68.

Le ou les échantillons d'eau 68 sont par exemple analysés en laboratoire, pour détecter la présence d'un ou plusieurs produits de fission issus du ressuage de l'assemblage de combustible nucléaire 12. Avantageusement, un seul échantillon d'eau est prélevé à la fin du test d'étanchéité, par exemple lorsqu'une température prédéfinie est mesurée par le capteur de température 38.

En complément, des produits de fission sont par exemple recherchés en continu dans l'eau prélevée au niveau de la prise de prélèvement 64 pendant le ressuage de l'assemblage de combustible.

Le fonctionnement de l'ensemble 5 découle de sa structure et va maintenant être brièvement décrit. Ce fonctionnement illustre un procédé de contrôle d'étanchéité de l'assemblage de combustible nucléaire 12 par ressuage selon l'invention

Il est tout d'abord à noter que le dispositif 7, avec ou sans l'unité de chauffage 9, peut fonctionner comme un descenseur classique.

En effet, le couvercle 26 étant dans la position de repos, il est possible de charger l'assemblage de combustible nucléaire 12 dans le logement 24 via le passage 33 dans l'extrémité supérieure 32. Le dispositif 7 permet ensuite de descendre ou de monter l'assemblage de combustible nucléaire 12 dans la piscine 14 selon la direction V.

La chaleur dégagée par l'assemblage de combustible nucléaire 12 est évacuée grâce à une circulation d'eau dans la gaine 44, avantageusement par convection naturelle, donc de bas en haut. Dans ce cas, la chaleur dégagée chauffe l'eau 40 présente dans le logement 24 et la fait monter dans la gaine 44. L'eau chauffée s'échappe via l'extrémité supérieure 32 et retourne dans la piscine 14. Ceci fait également entrer de l'eau dans le logement 24 via l'extrémité inférieure 36.

En variante non représentée, l'eau 40 est mise en mouvement par convection forcée dans la gaine 44.

L'assemblage de combustible nucléaire 12 est éventuellement déchargé du dispositif 7 via le passage 33, par exemple pour être entreposé dans la piscine 14.

Si l'on souhaite pratiquer un contrôle d'étanchéité de l'assemblage de combustible nucléaire 12, on le laisse dans le logement 24 ou on le charge dans le logement 24. Le couvercle 26 est mis dans la position active. La poche de gaz 52 est formée dans le couvercle 26 et s'étend verticalement jusqu'à l'extrémité supérieure 32. L'unité de chauffage 9 est fixée sur l'extrémité inférieure 36 de la nacelle 22, si elle ne l'était pas déjà.

Puis, l'unité de chauffage 9 chauffe l'eau 40, qui circule dans le logement 24. L'eau 40 est avantageusement bloquée vers le haut par la poche de gaz 52.

Dans le logement 24, l'eau 40 chauffée chauffe l'assemblage de combustible nucléaire 12 et déclenche un ressuage du ou des crayons 18 présentant un défaut d'étanchéité.

En variante, l'unité de chauffage 9 n'étant pas présente ou pas activée, l'eau 40 est chauffée par l'assemblage de combustible nucléaire 12 lui-même. Dit autrement, une montée en température de l'assemblage de combustible nucléaire 12 est réalisée en tout ou partie grâce à sa radioactivité.

Selon une autre variante encore, au lieu ou en complément du chauffage de l'eau 40, on remonte la nacelle 22 grâce au système de guidage 20, de façon à abaisser la pression hydrostatique de l'eau 40 autour de l'assemblage de combustible nucléaire 12 et provoquer un ressuage de l'assemblage de combustible nucléaire 12. Par exemple, la nacelle 22 est remontée sur une distance supérieure à 5 mètres, par exemple d'environ 6 mètres.

Le système de prélèvement 62 fournit l'échantillon d'eau 68, avantageusement en fin de test. L'échantillon d'eau 68 est analysé pour détecter la présence d'un ou plusieurs produits de fission issus du ressuage de l'assemblage de combustible nucléaire 12.

En complément éventuel, de l'eau est prélevée dans le logement 24 au niveau de la prise de prélèvement 64, avantageusement en continu, et des produits de fission éventuellement présents dans l'eau prélevée sont recherchés en continu.

Eventuellement, les gaz de ressuage 31 remontent dans la gaine 44 qui les canalise, puis traversent l'extrémité supérieure 32, et sont ensuite recueillis dans la poche 52 délimitée par le couvercle 26.

Ensuite, en complément éventuel, au moins une partie des gaz de ressuage 31 est avantageusement récupérée et analysée par le système de récupération et d'analyse 30, ce qui permet de les qualifier comme gaz de ressuage.

Le capteur de température 38 mesure avantageusement la température de l'eau 40 et permet de contrôler l'unité de chauffage 9.

Si aucun produit de fission n'est détecté, l'assemblage de combustible nucléaire 12 testé est déclaré étanche. Si au contraire des produits de fission sont détectés à l'aide du système de prélèvement 62, l'assemblage de combustible nucléaire 12 est déclaré non étanche. L'analyse de la radioactivité des gaz de ressuage 31 fournit avantageusement des informations complémentaires.

Grâce aux caractéristiques décrites ci-dessus, le dispositif 7 est un descenseur et permet aussi de réaliser rapidement et à moindre coût un test de ressuage. Grâce au dispositif 7, la piscine 14 n'a pas besoin de cellule de ressuage fixe ou mobile classique.

Un procédé de rénovation selon l'invention va maintenant être décrit.

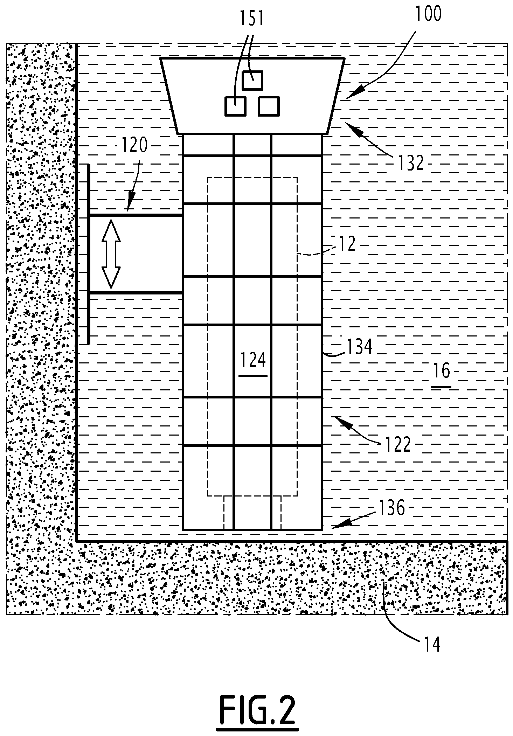

Il consiste par exemple à transformer un dispositif 100 représenté sur la figure 2, qui est un descenseur classique, en le dispositif 7 représenté sur la figure 1.

Le dispositif 100 comprend un dispositif de guidage 120 analogue au dispositif de guidage 20, et une nacelle 122 comprenant une extrémité supérieure 132 analogue à l'extrémité supérieure 32. La nacelle 122 définit un logement 124 adaptée pour recevoir un l'assemblage de combustible nucléaire 12.

La nacelle 122 diffère de la nacelle 22, notamment du fait qu'elle est ajourée pour permettre une circulation de l'eau 16 autour de l'assemblage de combustible nucléaire 12. La nacelle 122 possède une enveloppe latérale 134 qui n'est pas étanche, contrairement à l'enveloppe latérale 34, ni isolée thermiquement.

En outre, la nacelle 122 comprend une extrémité inférieure 136 qui n'est pas prévue pour recevoir une quelconque unité de chauffage.

Afin de rénover le dispositif 100, on remplace la nacelle 122 par une nacelle analogue à la nacelle 22 représentée sur la figure 1.

Il devient alors possible de mettre en oeuvre une unité de chauffage optionnelle analogue à l'unité de chauffage 9, un couvercle analogue au couvercle 26, et un système de prélèvement (62) analogue au système de prélèvement 62. Le dispositif ainsi rénové permet de réaliser facilement un contrôle d'étanchéité par ressuage de l'assemblage de combustible nucléaire 12, par chauffage, ou par abaissement de la pression hydrostatique de l'eau 40.

## Revendications

1. Dispositif (7) pour monter ou descendre un assemblage de combustible nucléaire (12) dans une piscine (14) d'une installation nucléaire, le dispositif (7) comprenant :
- un système de guidage (20) destiné à être fixé sur la piscine (14), et
- une nacelle (22) définissant un logement (24) pour recevoir l'assemblage de combustible nucléaire (12) et de l'eau (40) autour de l'assemblage de combustible nucléaire (12), la nacelle (22) comprenant une extrémité supérieure (32) définissant un passage (33) adapté pour permettre un chargement de l'assemblage de combustible nucléaire (12) dans le logement (24) par le haut, et une enveloppe latérale (34) adaptée pour entourer l'assemblage de combustible nucléaire (12) autour d'une direction (V) destinée à être sensiblement verticale, et
- au moins un système de prélèvement (62),
**caractérisé en ce que** :
- la nacelle (22) est montée mobile sur le système de guidage (20) en translation selon la direction (V),
- l'enveloppe latérale (34) est étanche à l'eau, et
- le système de prélèvement (62) est adapté pour fournir au moins un échantillon d'eau (68) prélevé dans le logement (24).

2. Dispositif (7) selon la revendication 1, dans lequel l'enveloppe latérale (34) comprend un isolant thermique (46) disposé entre l'eau (16) contenue dans la piscine (14) et l'eau chauffée (40) contenue dans le logement (24).

3. Dispositif (7) selon la revendication 1 ou 2, dans lequel l'enveloppe latérale (34) comprend une double paroi (48) en acier inoxydable et une couche d'air (50) située dans la double paroi (48).

4. Dispositif (7) selon l'une quelconque des revendications 1 à 3, dans lequel l'enveloppe latérale (34) est configurée pour former une gaine (44) de canalisation d'éventuels gaz de ressuage (31) de l'assemblage de combustible nucléaire (12) vers l'extrémité supérieure (32), le dispositif (7) comprenant un système de récupération et d'analyse (30) adapté pour récupérer et analyser les gaz de ressuage (31) issus de l'assemblage de combustible (12).

5. Dispositif (7) selon l'une quelconque des revendications 1 à 4, comprenant en outre un couvercle (26) mobile entre une position active, dans laquelle le couvercle (26) se situe au-dessus de l'extrémité supérieure (32), le couvercle (26) formant une poche (52) pour recevoir des gaz et empêcher une sortie de l'eau (40) hors du logement (24) via l'extrémité supérieure (32), et une position de repos, dans laquelle le couvercle (26) laisse libre ledit passage (33) pour permettre ledit chargement de l'assemblage de combustible nucléaire (12).

6. Dispositif (7) selon la revendication 5, dans lequel le couvercle (26) est monté rotatif sur la nacelle (22) entre la position active et la position de repos.

7. Ensemble (5) comprenant un dispositif (7) selon l'une quelconque des revendications 1 à 6, et une unité de chauffage (9) adaptée pour chauffer l'eau (40) présente dans le logement (24).

8. Ensemble (5) selon la revendications 7, dans lequel une extrémité inférieure (36) de la nacelle (22) est configurée pour permettre un montage et un démontage de l'unité de chauffage (9) alors que la nacelle (22) est immergée dans l'eau (16) de la piscine (14).

9. Procédé de contrôle d'étanchéité d'un assemblage de combustible nucléaire (12) par ressuage, mettant en oeuvre un dispositif (7) selon l'une quelconque des revendications 1 à 6, ou un ensemble (5) selon la revendication 7 ou 8, et comprenant les étapes suivantes :
- chargement de l'assemblage de combustible nucléaire (12) dans la nacelle (22),
- ressuage de l'assemblage de combustible nucléaire (12) par chauffage de l'eau (40) et/ou montée en température de l'assemblage de combustible nucléaire (12) du fait de sa radioactivité, et/ou par une remontée de la nacelle (22) en translation selon la direction (V), et
- prélèvement d'au moins un échantillon d'eau (68) dans le logement (24).

10. Procédé de rénovation pour obtenir un dispositif (7) selon l'une quelconque des revendications 1 à 6, comprenant :
- un remplacement d'une nacelle (122) préexistante ajourée par la nacelle (22) dudit dispositif (7), et
- ajout d'au moins un système de prélèvement (62) adapté pour fournir au moins un échantillon d'eau (68) prélevé dans le logement (24).

## Patentansprüche

1. Vorrichtung (7) zum Anheben oder Absenken eines Kernbrennstabbündels (12) in einem Becken (14) einer kerntechnischen Anlage, die Vorrichtung (7) umfassend:
- ein Führungssystem (20), das dazu bestimmt ist, an dem Becken (14) befestigt zu werden, und
- eine Gondel (22), die eine Aufnahme (24) zum Aufnehmen des Kernbrennstabbündels (12) und von Wasser (40) um das Kernbrennstabbündel (12) herum definiert, die Gondel (22) umfassend ein oberes Ende (32), das einen Durchgang (33) definiert, der angepasst ist, um ein Laden des Kernbrennstabbündels (12) in die Aufnahme (24) von oben zu ermöglichen, und eine seitliche Umhüllung (34), die angepasst ist, um das Kernbrennstabbündel (12) um eine Richtung (V) herum umgibt, die dazu bestimmt ist, im Wesentlichen vertikal zu sein, und
- mindestens ein Entnahmesystem (62),
**dadurch gekennzeichnet, dass**:
- die Gondel (22) für eine Translation in der Richtung (V) beweglich an dem Führungssystem (20) montiert ist,
- die seitliche Umhüllung (34) wasserdicht ist, und
- das Entnahmesystem (62) angepasst ist, um mindestens eine Wasserprobe (68) bereitzustellen, die aus der Aufnahme (24) entnommen wird.

2. Vorrichtung (7) nach Anspruch 1, wobei die seitliche Umhüllung (34) eine Wärmeisolierung (46) umfasst, die zwischen dem in dem Becken (14) enthaltenen Wasser (16) und dem in der Aufnahme (24) enthaltenen erhitzten Wasser (40) angeordnet ist.

3. Vorrichtung (7) nach Anspruch 1 oder 2, wobei die seitliche Umhüllung (34) eine Doppelwand (48) aus rostfreier Stahl und eine Luftschicht (50), die sich in der Doppelwand (48) befindet, umfasst.

4. Vorrichtung (7) nach einem der Ansprüche 1 bis 3, wobei die seitliche Umhüllung (34) konfiguriert ist, um einen Kanal (44) zur Kanalisierung möglicher Eindringprüfungsgase (31) aus dem Kernbrennstabbündel (12) zu dem oberen Ende (32) zu bilden, die Vorrichtung (7) umfassend ein Rückgewinnungs- und Analysesystem (30) umfasst, das angepasst ist, um die aus dem Kernbrennstabbündel (12) stammenden Eindringprüfungsgase (31) aufzufangen und zu analysieren.

5. Vorrichtung (7) nach einem der Ansprüche 1 bis 4, ferner umfassend eine Abdeckung (26), die zwischen einer aktiven Position, in der sich die Abdeckung (26) über dem oberen Ende (32) befindet, wobei die Abdeckung (26) eine Tasche (52) zum Aufnehmen von Gasen bildet und einen Austritt von Wasser (40) aus der Aufnahme (24) über das obere Ende (32) verhindert, und einer Ruheposition, in der die Abdeckung (26) den Durchgang (33) frei lässt, um das Laden des Kernbrennstabbündels (12) zu ermöglichen, beweglich ist.

6. Vorrichtung (7) nach Anspruch 5, wobei die Abdeckung (26) drehbar zwischen der aktiven Position und der Ruheposition an der Gondel (22) montiert ist.

7. Baugruppe (5), umfassend eine Vorrichtung (7) nach einem der Ansprüche 1 bis 6 und eine Heizeinheit (9), die angepasst ist, um das in der Aufnahme (24) vorhandene Wasser (40) zu erhitzen.

8. Anordnung (5) nach Anspruch 7, wobei ein unteres Ende (36) der Gondel (22) konfiguriert ist, um eine Montage und Demontage der Heizeinheit (9) zu ermöglichen, während die Gondel (22) in das Wasser (16) des Beckens (14) eingetaucht ist.

9. Verfahren zur Dichtheitsprüfung eines Kernbrennstabbündels (12) durch Eindringprüfung, wobei eine Vorrichtung (7) nach einem der Ansprüche 1 bis 6 oder eine Baugruppe (5) nach Anspruch 7 oder 8 eingesetzt wird, umfassend die folgenden Schritte:
- Laden des Kernbrennstabbündels (12) in die Gondel (22),
- Eindringprüfung des Kernbrennstabbündels (12) durch Erhitzen des Wassers (40) und/oder Erhöhen der Temperatur des Kernbrennstabbündels (12) aufgrund seiner Radioaktivität und/oder durch Anheben der Gondel (22) in Translation entlang der Richtung (V), und
- Entnehmen von mindestens einer Wasserprobe (68) in der Aufnahme (24).

10. Erneuerungsverfahren, um eine Vorrichtung (7) nach einem der Ansprüche 1 bis 6 zu erlangen, umfassend:
- ein Ersetzen einer bereits vorhandenen, durchbrochenen Gondel (122) durch die Gondel (22) der Vorrichtung (7), und
- Hinzufügen von mindestens einem Entnahmesystem (62), das angepasst ist, um mindestens eine Wasserprobe (68) bereitzustellen, die aus der Aufnahme (24) entnommen wird.

## Claims

1. A device (7) for raising or lowering a nuclear fuel assembly (12) in a pool (14) of a nuclear installation, the device (7) comprising:
- a guidance system (20) intended to be fastened to the pool (14), and
- a basket (22) defining a housing (24) for receiving the nuclear fuel assembly (12) and water (40) surrounding the nuclear fuel assembly (12), the basket (22) comprising an upper end (32) defining a passage (33) adapted for allowing loading of the nuclear fuel assembly (12) into the housing (24) from above, and a lateral jacket (34) adapted for surrounding the nuclear fuel assembly (12) around a direction (V) intended to be substantially vertical, and
- at least one sampling system (62),
**characterized in that**:
- the basket (22) is mounted on the guidance system (20) movable in translation according to the direction (V),
- the lateral jacket (34) is watertight, and
- the sampling system (62) is adapted to provide at least one water sample (68) taken from the housing (24).

2. The device (7) according to claim 1, wherein the lateral jacket (34) comprises a thermal insulator (46) arranged between the water (16) contained in the pool (14) and the heated water (40) contained in the housing (24).

3. The device (7) according to claim 1 or 2, wherein the lateral jacket (34) comprises a stainless steel double wall (48) and an air layer (50) located within the double wall (48).

4. The device (7) according to any one of claims 1 to 3, wherein the lateral jacket (34) is configured to form a sheath (44) for channeling any sipping gases (31) from the nuclear fuel assembly (12) toward the upper end (32), the device (7) comprising a recovery and analysis system (30) adapted for recovering and analyzing the sipping gases (31) coming from the fuel assembly (12).

5. The device (7) according to any one of claims 1 to 4, further comprising a cover (26) movable between an active position, in which the cover (26) is located above the upper end (32), the cover (26) forming a pocket (52) for receiving gases and preventing an outflow of water (40) from the housing (24) via the upper end (32), and a rest position, wherein the cover (26) leaves free said passage (33) to allow said loading of the nuclear fuel assembly (12).

6. The device (7) according to claim 5, wherein the cover (26) is rotatably mounted on the basket (22) between the active position and the rest position.

7. An assembly (5) comprising a device (7) according to any one of claims 1 to 6, and a heating unit (9) adapted for heating the water (40) present in the housing (24).

8. The assembly (5) according to claim 7, wherein a lower end (36) of the basket (22) is configured to allow assembly and disassembly of the heating unit (9) while the basket (22) is immersed in the water (16) of the pool (14).

9. A method for controlling the sealing of a nuclear fuel assembly (12) by sipping, using a device (7) according to any one of claims 1 to 6, or an assembly (5) according to claim 7 or 8, and comprising the following steps:
- loading the nuclear fuel assembly (12) into the basket (22),
- sipping of the nuclear fuel assembly (12) by heating the water (40) and/or increasing the temperature of the nuclear fuel assembly (12) due to its radioactivity, and/or by raising the basket (22) in translation along the direction (V), and
- taking at least one water sample (68) from the housing (24).

10. A renovation method for obtaining a device (7) according to any one of claims 1 to 6, comprising:
- replacing a pre-existing perforated basket (122) with the basket (22) of said device (7), and
- adding at least one sampling system (62) adapted for providing at least one water sample (68) taken from the housing (24).
